**Europäisches Patentamt**

(19) **European Patent Office**

**Office européen des brevets**

(11) Veröffentlichungsnummer: **0 160 738**
**B1**

(12) **EUROPÄISCHE PATENTSCHRIFT**

(45) Veröffentlichungstag der Patentschrift:
02.09.87

(21) Anmeldenummer: **84113313.5**

(22) Anmeldetag: **06.11.84**

(51) Int. Cl.⁴: **F 16 K 35/06**

(54) **Verriegelungsvorrichtung für Armaturen.**

(30) Priorität: **07.03.84 DE 8406892 U**

(43) Veröffentlichungstag der Anmeldung:
**13.11.85 Patentblatt 85/46**

(45) Bekanntmachung des Hinweises auf die Patenterteilung:
**02.09.87 Patentblatt 87/36**

(84) Benannte Vertragsstaaten:
**AT CH DE FR GB IT LI NL**

(56) Entgegenhaltungen:
**DE-U-7 819 582**
**US-A-2 234 052**
**US-A-2 439 113**
**US-A-3 090 218**

(73) Patentinhaber: **VALVUE ARMATUREN Vertrieb und Beratung GmbH & Co. KG, Postfach 93 06 29, D-2102 Hamburg 93 (DE)**

(72) Erfinder: **Rothert, Dieter Heinrich, Drosselweg 31, D-2110 Buchholz (DE)**

(74) Vertreter: **Dipl.- Ing. H. Hauck Dipl.- Phys. W. Schmitz Dipl.- Ing. E. Graalfs Dipl.- Ing. W. Wehnert Dr.- Ing. W. Döring, Neuer Wall 41, D-2000 Hamburg 36 (DE)**

## Beschreibung

Die Neuerung bezieht sich auf eine Verriegelungsvorrichtung für Armaturen, deren Verstellorgan mit der Ausgangswelle eines Getriebes verbunden ist, während die Eingangswelle des Getriebes mit einem Handrad verbunden ist.

Es ist eine Verriegelungsvorrichtung für Absperrarmaturen mit axial verstellbarer nicht drehender Spindel bekanntgeworden, bei der mit dem freien Ende der Spindel eine Verriegelungsstange verbunden ist, die in vorgegebenem Abstand zum Spindelende am Umfang mindestens eine Verriegelungsausnehmung aufweist und bei der ein mit der Spindelmutter in drehfester Verbindung stehendes, mindestens ein Schloß haltendes Trägerbauteil vorgesehen ist, das sich in radialem Abstand zur Verriegelungsstange annähernd parallel dazu erstreckt, wobei Schloßriegel und Verriegelungsausnehmung radial zueinander ausgerichtet sind, wenn das Absperrorgan bzw. die Spindel eine Stellung einnimmt, in der eine Verriegelung vorgenommen werden soll (DE-U- 78 19 582). Bei der bekannten Verriegelungsvorrichtung verstellt sich die Verriegelungsausnehmung axial mit der Verstellung der Spindel relativ zum axial festen Schloß. Das an dem Trägerbauteil angebrachte Schloß dreht sich mit der Spindelmutter bzw. mit der Handhabe, bleibt jedoch axial in der 2gleichen Höhe, wobei diese Höhe so gewählt ist, daß eine Ausrichtung von Schloßriegel und Verriegelungsausnehmung zustande kommt, wenn das Absperrorgan sich entwerder in der Schließ- oder Öffnungsstellung befindet. Eine derartige Verriegelungsvorrichtung hat gegenüber anderen ebenfalls bekannten Verriegelungen den Vorteil, daß sie für verschieden aufgebaute Armaturen unterschiedslos eingesetzt werden kann. Sie ist jedoch, wie bereits ausgeführt, nur für drehfeste, axial bewegliche Verstellspindeln geeignet.

Es gibt zahlreiche Armaturen, die über ein Getriebe betätigt werden. Die Ausgangswelle des Getriebes ist mit dem Verstellorgan der Armatur verbunden. Die Eingangswelle des Getriebes ist mit einer Handradwelle oder dergleichen verbunden. Derartige Getriebe sind zumeist Untersetzungsgetriebe, um ein größeres Moment am Verstellorgan aufbringen zu können, vor allem zur Erzielung hoher Losbrechmomente.

Der Neuerung liegt die Aufgabe zugrunde, eine Verriegelungsvorrichtung für Armaturen zu schaffen, die über ein Getriebe betätigt werden.

Diese Aufgabe wird neuerungsgemäß dadurch gelöst, daß zwischen dem Handrad und der Eingangswelle des Getriebes ein Verlängerungsstück angeordnet ist, mit dem Getriebegehäuse eine das Verlängerungsstück koaxial umgebende Hülse verbunden ist, die an der Innenseite ein Gewinde aufweist, zwischen Verlängerungsstück und Hülse ein Verriegelungsring angeordnet ist, dessen Umfang ein mit dem Hülsengewinde in Eingriff stehendes Gewinde aufweist und der drehfest, jedoch axial gleitend beweglich auf dem Verlängerungsstück sitzt, und an der Außenseite der Hülse mindestens ein Schloß angeordnet ist, dessen Riegel durch eine Bohrung der Hülse hindurchführbar und in der Verriegelungsstellung in Eingriff mit einer radialen Ausnehmung des Verriegelungsrings bringbar ist.

Bei der neuerungsgemäßen Vorrichtung ist die Verriegelung mit der Handrad-Getriebewelle gekoppelt und nicht mit der Armaturenspindel. Im letzteren Fall würde durch die Erhöhung der Kraft infolge der Getriebeuntersetzung sehr leicht eine Zerstörung des Verriegelungsmechanismus stattfinden.

Bei der neuerungsgemäßen Vorrichtung ist zwischen Handradwelle und Eingangswelle des Getriebes ein Verlängerungsstück angeordnet, auf dem drehfest, jedoch axial beweglich ein Verriegelungsring gelagert ist. Der Verriegelungsring ist als Gewindering mit Außengewinde ausgeführt, das in das Innengewinde der das Verlängerungsstück koaxial umgebenden, mit dem Getriebe fest verbundenen Hülse eingreift. Bei einer Verdrehung des Handrades wird der Verriegelungsring verstellt, so daß die Verriegelungsausnehmung im Verriegelungsring wahlweise mit der radialen Bohrung in der Hülse ausgerichtet ist oder nicht. Es versteht sich, daß die vom Verriegelungsring zurückgelegte Strecke der Drehzahl der Handradwalle entspricht, welche nötig ist, um die Armatur zwischen "Geschlossen" und "Offen" zu verstellen. Vorzugsweise dient die Verriegelung für die Endstellungen der Handradwelle, d.h. für "Geschlossen" und "Offen", wobei in diesem Fall zwei im Abstand angeordnete Schlösser notwendig sind, um eine Verriegelung in beiden Endstellungen zu ermöglichen. Es versteht sich ferner, daß auch eine Stellung zwischen "Offen" und "Geschlossen" als verriegelbare Endstellung gewählt werden kann.

Bei der Ausführungsform der neuerungsgemäßen Vorrichtung mit zwei Schlössern sieht eine Ausgestaltung der Neuerung vor, daß der Verriegelungsring zwei axial beabstandete Verriegelungsausnehmungen aufweist. Jeweils eine Verriegelungsausnehmung ist einem Schloßriegel zugeordnet.

Das Verlängerungsstück ist nach einer weiteren Ausgestaltung der Neuerung vorzugsweise ein Verlängerungsrohr, das auf die Eingangswelle des Getriebes aufgekeilt ist. Vorzugsweise wird hierzu ein Rohrstück verwendet, das mit der Eingangswelle verkeilt ist, wobei an das Rohrstück ein weiteres Rohrstück angeschweißt wird.

Die Befestigung der Hülse erfolgt nach einer weiteren Ausgestaltung der Erfindung vorzugsweise mit Hilfe eines Flansches am Getriebegehäuse.

Um eine Verriegelung der Armatur in einer Zwischenstellung zu verhindern bzw. eine Verriegelung nur in den Endstellungen zu bewerkstelligen, sieht eine Ausgestaltung der Neuerung vor, daß zwischen Verlängerungsstück und Hülse ein federvorgespanntes Sperrorgan angeordnet ist, das in der Entriegelungsstellung mit einem Anschlag an der Hülse zusammenwirkt und die radiale Öffnung in der Hülse verschließt und das durch den Verriegelungsring in eine Freigabestellung bewegbar ist.

Die Neuerung wird nachfolgend anhand einer Zeichnung näher erläutert.

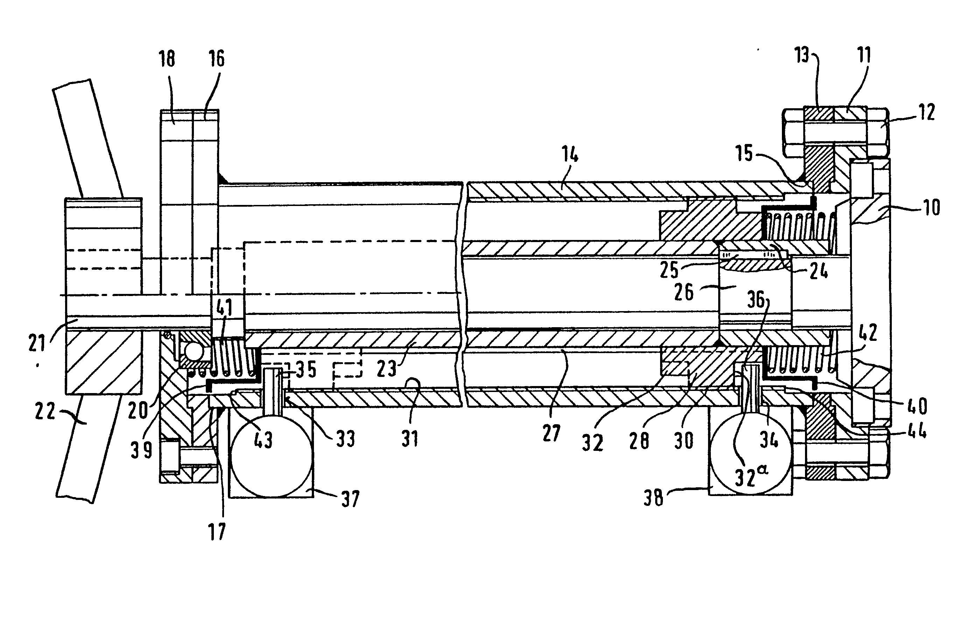

Die einzige Figur zeigt teils in Seitenansicht, teils im Schnitt eine Verriegelungsvorrichtung nach der Neuerung.

Bevor auf die in der Zeichnung dargestellten Einzelheiten näher eingegangen wird, sei vorangestellt, daß jedes der beschriebenen Merkmale für sich oder in Verbindung mit Merkmalen der Ansprüche von neuerungswesentlicher Bedeutung ist.

An einem nur andeutungsweise dargestellten Getriebegehäuse 10, das an einer Armatur, beispielsweise einem Kugelhahn, einem Schieber oder dergleichen angeordnet ist, ist ein erster Flansch 11 durch Verschweißung befestigt, der mittels Schrauben 12 einen zweiten Flansch 13 hält. Mit dem Flansch 13 ist eine Hülse 14 verschweißt, die mit einem Ende in einer ringförmigen Ausnehmung 15 des Flansches sitzt. Am anderen Ende der Hülse 14 ist ein Flansch 16 angeschweißt, wobei die Hülse 14 wiederum in einer ringförmigen Ausnehmung 17 des Flansches 16 sitzt. Wie die Flansche 11, 13 ist auch ein weiterer Flansch 18 mit dem Flansch 16 über eine formschlüssige Verbindung radial festgelegt. Der Flansch 18 ist im übrigen mit dem Flansch 16 verschraubt. Der Flansch 18 lagert ein Kugellager 20, das auf einer Welle 21 eines Handrades 22 sitzt. Die Welle 21 ist mit einem Verlängerungsrohr 23 verbunden, das mit einem Rohrstück 24 verschweißt ist. Die Rohrstücke 23, 24 sind gleichachsig angeordnet. Das Rohrstück 24 weist zwei gegenüberliegende Nuten auf zur Aufnahme von Keilen 25, die in Keilnuten einer Eingangswelle 26 für das Getriebe sitzen. Eine Drehung am Handrad 22 setzt mithin die Eingangswelle 26 in Drehbewegung.

Am Außenumfang des Verlängerungsrohrs 23 bzw. 24 ist mindestens eine Feder 27 angeordnet, die mit einer Nut eines Verriegelungsringes 28 zusammenwirkt, der auf dem Rohr 23 angeordnet ist. Der Verriegelungsring 28 besitzt am Außenumfang ein Feingewinde 30, das mit einem Feingewinde 31 an der Innenseite der Hülse 14 zusammenwirkt. Der Verriegelungsring 28 weist zwei axial beabstandete Verriegelungsausnehmungen 32, 32a auf. Die Hülse 14 weist im axialen Abstand zwei radiale Bohrungen 33, 34 auf zur Aufnahme von Schloßriegeln 35 bzw. 36. Sie gehören zu Schlössern 37 bzw. 38, die an der Außenseite der Hülse 14 angeordnet bzw. befestigt sind. In der Zeichnung sind beide Schlösser 37, 38 in Verriegelungsstellung dargestellt, wobei bezüglich des Schlosses 37 der Verriegelungsring nur gestrichelt dargestellt ist, da er naturgemäß nur eine der beiden Positionen einnehmen kann.

Zwischen Verlängerungsrohr 23 und Hülse 14 sind im Querschnitt Z-förmige Sperrhülsen 39, 40 verschiebbar angeordnet, die mittels Federn 41 bzw. 42 jeweils in Richtung der Bohrung 33 bzw. 34 vorgespannt sind. Die Sperrhülsen 39, 40 können, wie in der Zeichnung dargestellt, durch den Verriegelungsring 28 so verstellt werden, daß die Verriegelungsausnehmung 32 bzw. 32a mit der Bohrung 33, 34 ausgerichtet werden kann. Andernfalls schieben sie sich vor die Bohrung 33 bzw. 34, um ein Verriegeln zu verhindern. Der radial nach außen stehende Flansch der Sperrhülse 39 bzw. 40 wirkt mit einem Anschlag 43 bzw. 44 an der Innenseite der Hülse 14 zusammen, um die Bewegung der Sperrhülse über die Öffnung 33 bzw. 34 hinaus zu begrenzen.

**Patentansprüche**

1. Verriegelungsvorrichtung für Armaturen, deren Verstellorgan mit der Ausgangswelle eines Getriebes verbunden ist, während die Eingangswelle (26) des Getriebes mit einem Handrad (22) verbunden ist, daß zwischen dem Handrad (22) und der Eingangswelle (26) des Getriebes ein Verlängerungsstück (23) angeordnet ist, daß mit dem Getriebegehäuse (10) eine, das Verlängerungsstück (23) koaxial umgebende Hülse (14) verbunden ist, die an der Innenseite ein Gewinde (31) aufweist, daß zwischen Verlängerungsstück (23) und Hülse (14) ein Verriegelungsring (28) angeordnet ist, dessen Umfang ein mit dem Hülsengewinde in Eingriff stehendes Gewinde (30) aufweist und der drehfest, jedoch axial gleitend beweglich auf dem Verlängerungsstück (23) sitzt, und daß an der Außenseite der Hülse (14) mindestens ein Schloß (37, 38) angeordnet ist, dessen Riegel (35 bzw. 36) durch eine Bohrung (33, 34) der Hülse hindurchführbar und in der Verriegelungsstellung in Eingriff mit einer radialen Ausnehmung (32 bzw. 32a) des Verriegelungsringes (28) bringbar ist.

2. Vorrichtung nach Anspruch 1, dadurch gekennzeichnet, daß im Abstand voneinander zwei Schlösser (37, 38) an der Hülse (14) angeordnet sind und der Verriegelungsring (28) zwei axial beabstandete Verriegelungsausnehmungen (32, 32a) aufweist.

3. Vorrichtung nach Anspruch 1 oder 2, dadurch gekennzeichnet, daß das Verlängerungsstück (24) ein Verlängerungsrohr ist, das auf die Eingangswelle (26) des Getriebes aufgekeilt ist.

4. Vorrichtung nach einem der Ansprüche 1 bis 3, dadurch gekennzeichnet, daß die Hülse (14) mittels eines Flansches (11, 13) an dem Getriebegehäuse (10) befestigt ist.

5. Vorrichtung nach einem der Ansprüche 1 bis 4, dadurch gekennzeichnet, daß am freien Ende der Hülse (14) ein Flansch (16, 18) zur Führung der Handradwelle (21) angeordnet ist.

6. Vorrichtung nach einem dar Ansprüche 1 bis 5, dadurch gekennzeichnet, daß zwischen Verlängerungsstück (23) und Hülse (14) ein federvorgespanntes Sperrorgan (39, 40) angeordnet ist, das in der Entriegelungsstellung mit einem Anschlag (43, 44) an der Hülse (14) zusammenwirkt und die radiale Öffnung (33, 34) in der Hülse (14) verschließt und das durch den Verriegelungsring (28) in eine Freigabestellung bewegbar ist.

## Claims

1. Locking device for fittings having a control member connected to the output shaft of a transmission, whereas the input shaft (26) of the transmission is connected to a hand-wheel (22), characterized in that an extension (23) is arranged between the hand-wheel (22) and the input shaft (26) of the transmission, that connected to the transmission casing (10) is a sleeve (14) surrounding coaxially the extension (23) and having threads (31) on the inner side thereof, that between the extension (23) and the sleeve (14) is disposed a locking ring (28) whose circumference has threads (30) in engagement with the sleeve threads and which is seated non-rotatably, but for axial sliding movement on the extension (23), and that on the outer side of the sleeve (14) is arranged at least one lock (37, 38) whose latch (35 and 36, respectively) is adapted to extend through a bore (33, 34) of the sleeve and in the locking position is movable into engagement with a radial recess (32 and 32a, respectively) of the locking ring (28).

2. Device as in claim 1, characterized in that the two locks (37,38) are arranged in spaced relationship on the sleeve (14), and that the locking ring (28) includes two axially spaced locking recesses (32, 32a).

3. Device as in claim 1 or 2, characterized in that the extension (24) is a tubular extension which is keyed onto the input shaft (26) of the transmission.

4. Device as in any of claims 1 to 3, characterized in that the sleeve (14) is attached to the transmission casing (10) via a flange (11, 13).

5. device as in any of claims 1 to 4, characterized in that the free end of the sleeve (14) has arranged thereon a flange (16, 18) for guiging the hand-wheel shaft (21).

6. device as in any of claims 1 to 5, characterized in that between the extension (23) and the sleeve (14) is disposed a spring-biased arresting member (39, 40) which in the unlocking position cooperates with an abutment (43,44) on the sleeve (14) and closes the radial aperture (33, 34) in the sleeve (14) and is movable to a release position by the locking ring (28).

## Revendications

1. Dispositif de verrouillage pour armatures dont l'organe mobile est relié à l'arbre de sortie d'un mécanisme de transmission, tandis que l'arbre d'entrée (26) de ce mécanisme est relié à une roue de commande manuelle, caractérisé par le fait qu'entre la roue de commande manuelle (22) et l'arbre d'entrée (26) du mécanisme est disposé un prolongateur (23), caractérisé en outre en ce qu'une douille (74) entourant coaxialement le prolongateur (23) est reliée au boîtier (10) du mécanisme, ladite douille présentant sur sa face interne un filetage (31), caractérisé en outre en ce qu'un anneau de verrouillage (28) est disposé entre le prolongateur (23) et la douille (14), la périphérie de cet anneau comportant un filetage (30) coopérant avec le filetage de la douille et ledit anneau reposant sur le prolongateur (23) en étant fixe en rotation mais pouvant coulisser axialement sur le prolongateur, et caractérisé enfin en ce que sur la face extérieure de la douille (14) est disposée au moins une serrure (37, 38), dont le verrou (35, 36) peut être introduit à travers une ouverture (33, 34) de la douille et peut être placé dans la position de verrouillage en engagement evec un évidement radial (32, 32a) de l'anneau de verrouillage (28).

2. Dispositif selon la revendioation 1, caractérisé en ce que deux serrures (37, 38) sont disposées à une certaine distance l'une de l'autre sur le douille (14) tandis que l'anneau de verrouillage (28) présente deux évidements de verrouillage (31, 32) écartés axialement.

3. Dispositif selon la revendication 1 ou 2, caractérisé en ce que le prolonkateur (24) est un tube qui est claveté sur l'arbre d'entrée (26) du mécanisme.

4. Dispositif selon l'une des revendications précédentes, caractérisé en ce que la douille (14) est fixée au moyen d'une bride (11, 13) sur le boîtier (10) du mécanisme.

5. Dispositif selon l'une des revendications 1 à 4, caractérisé en ce que l'extrémité libre de la douille (14) comporte une bride (16, 18) pour guider l'arbre (21) de la roue de commande manuelle.

6. Dispositif selon l'une revendications précédentes, caractérisé par le fait qu'entre le prolongateur (23) et la douille (14) est disposé un organe de blocage (39, 40) chargé par un ressort, lequel organe de blocage coopère dans sa position de déverrouillage, avec une butée (43, 44) prévu sur la douille (14) et ferme l'orifice radial (33, 34) de la douille (14), ledit organe de blocage pouvant être déplacé dans une position de libération par l'anneau de verrouillage (28).